Europäisches Patentamt

European Patent Office

Office européen des brevets

(11) Publication number: 0 366 231
A1

## EUROPEAN PATENT APPLICATION

(21) Application number: 89308058.0

(22) Date of filing: 08.08.89

(51) Int. Cl.⁵: **C02F 1/00 , C02F 1/28 , C02F 1/68**

(30) Priority: 26.09.88 US 249551

(43) Date of publication of application:
**02.05.90 Bulletin 90/18**

(84) Designated Contracting States:
**AT BE CH DE ES FR GB GR IT LI LU NL SE**

(71) Applicant: ZIMPRO/PASSAVANT INC.
301 West Military Road
Rothschild Wisconsin 54474(US)

(72) Inventor: Hoffman, Mark C.
2016 Creciente road
Mosinee Wisconsin 54455(US)
Inventor: Oettinger, Thomas P.
302 Charles Street
Schofield Winsconsin 54476(US)

(74) Representative: Corin, Christopher John et al
Mathisen Macara & Co. The Coach House 6-8
Swakeleys Road
Ickenham Uxbridge UB10 8BZ(GB)

(54) **A process for introducing powdered material to a liquid medium.**

(57) A process for addition of powdered substances, such as powdered carbon, to waste water comprising packaging the powdered substance in a water-soluble container (16 or 28). The entire package is introduced to the liquid medium where it floats on the surface (18). The underside contacting the liquid dissolves first and the powdered carbon is progressively dispersed into the liquid while the upper surface of the package prevents release of the powdered substance to the surrounding environment. The water soluble package is preferablfy made of polyvinyl alcohol and is provided initially with a water resistant outer package for storage and transport.

Fig. 1

Xerox Copy Centre

# A PROCESS FOR INTRODUCING POWDERED MATERIAL TO A LIQUID MEDIUM

This invention relates to a process for adding powdered substances to a waste water treatment system and, more particularly, to packaging for such materials.

The addition of powdered substances to aqueous systems has always presented problems. Opening a container of powdered material to add it to an aqueous system can generate airborne dust which can contact the user and can easily be spread by air currents. In particular, the addition of powdered activated carbon to a waste water treatment system can give rise to these types of dusting problems when the powdered carbon containers are opened and the carbon added to the waste water. Generally, the powdered carbon is dumped or otherwise removed from its container and poured or otherwise introduced into the waste water.

The benefits of utilizing powdered activated carbon in the treatment of waste streams, for example industrial or municipal waste streams, is well-known. Examples of systems utilizing powdered, activated carbon for such treatment can be found in US-A 3 904 518 and US-A 4 069 148 which are assigned to the assignee of this application. The activated carbon is in a very fine particulate form which can be difficult to handle and to introduce into a waste stream. It can become airborne very readily, contaminating the surrounding air and to some degree diminishing the amount of activated carbon which is actually introduced into the waste stream. In addition, the finely-ground activated carbon is not readily wetted when added directly to liquid waste stream, which results in the activated carbon floating on the liquid surface for a period of time until it is finally taken into the liquid medium where it can enter into the treatment process. As long as the activated carbon remains on the surface of the liquid medium, it remains susceptible to becoming airborne with the above-mentioned deleterious effects.

There have been a number of suggestions in the past for attempting effectively to introduce the powdered activated carbon into the liquid medium.

It is common practice to use a tank equipped with a mixer to wet powdered carbon and form an aqueous slurry which is then introduced into waste water which is to be treated. Another proposal has used eductors to introduce the carbon below the surface of the liquid medium. Vacuum arrangements have been used to draw the activated carbon into and below the surface of the stream. Examples of such arrangements can be found in US-A 4 357 953 and US-A 3 561 733.

These proposals are relatively capital intensive as they require considerable apparatus and control mechanisms for operation, and also a sizeable amount of operator attention. In addition, it has been recognized that it is most effective if the activated carbon can be introduced into the waste stream by a single operator.

This invention, in part, contemplates enclosing the powdered substance in a water soluble package which can be handled by a single individual. The broad concept of using a water soluble film to provide a package for preparing aqueous solutions or suspensions of a variety of materials has also been described.

US-A 2 750 027 discloses a water soluble polyvinyl alcohol package containing a dye material. The package dissolves in water to allow the dye to form a colour slick.

US-A 2 982 394 discloses a water soluble film of carboxymethyl dextran for packaging particulate solid material for soil conditioning where the film dissolves on exposure to soil mixture.

US-A 3 277 009 discloses a water soluble packaging film of polypyrrolidone for packaging solids or liquids whereby the package dissolves in aqueous medium to disperse the solid or liquid. Examples of materials packaged include soaps, pesticides, pigments, instant coffee, sugar, gasoline, and drugs.

US-A 3 294 224 discloses a water soluble package for paint pigment which, when added to water, produces a water-based paint. The water soluble package is sealed within an air and moisture impervious film for storage.

US-A 3 186 869 and US-A 3 322 674 disclose a water soluble laundry package for bleach or detergent.

US-A 3 695 898 discloses a water soluble polyvinylalcohol/polyvinylpyrrolidone film for packaging pulverulent materials including pesticides, cleaning products, process chemicals such as carbon black and activated charcoal, and dyes and pigments.

US-A 4 119 604, US-A 4 155 971 and US-A 156 047, disclose a polyvinyl alcohol composition useful for preparing cold water soluble films for use as packages for pulverulent materials.

The problem to be overcome by the present invention is to provide a satisfactory and inexpensive process for introducing a powdered substance, such as activated carbon to waste water.

According to the present invention there is provided a process for addition of a powdered substance to waste water in a waste water treatment process characterised by the steps of providing a sealed package of water-soluble material containing said powdered substance and floating said sealed package on the surface of said waste water, the portion of said package in contact with said waste water dissolving and allowing said powdered substance to disperse into and below the surface of said waste water and the remainder of said package remaining in tact above said powdered substance thus preventing escape of said powdered substance above the surface of said waste water.

Further according to the present invention there is provided a sealed package for powdered substances useable in a waste water treatment process characterised in that the package is made of water soluble material, and a predetermined amount of said powdered substance is contained within said package, said package being capable of floating on a body of waste water.

Two embodiments of packages in accordance with the invention will now be described, by way of example, with reference to the accompanying drawings, in which:

Figure 1 is a perspective view of a powdered activated carbon package in accordance with the invention;

Figure 2 is a section on line 2-2 in Figure 1 illustrating the orientation of the package on the surface of a liquid medium;

Figure 3 is a section on line 3-3 in Figure 1 and illustrating the underside of the package partially dissolved by the liquid medium and the activated carbon being dispersed into the liquid medium;

Figure 4 is a side view of the package of Figures 1, 2 and 3 within an outer package, and shown partially broken away;

Figure 5 is a cross section of an alternative embodiment; and

Figure 6 is a side view of the embodiment of Figure 5 partially broken away to expose the interior.

This invention is intended for the addition of powdered activated carbon to a waste water treatment process. The waste water treatment processes described in US-A 3 904 518 and US-A 4 069 148 employ the addition of powdered activated carbon to a waste stream. These are examples of processes where this invention is applicable, although any waste water treatment process which utilizes powdered activated carbon can employ this invention.

Typically, the powdered activated carbon used in waste water treatment is a very finely divided material wherein 95% passes through a 325 mesh screen. This gives rise to a dust problem when the powdered activated carbon is handled, i.e., the carbon can be released into the environment where it can contact the operational personnel or result in other environmental problems.

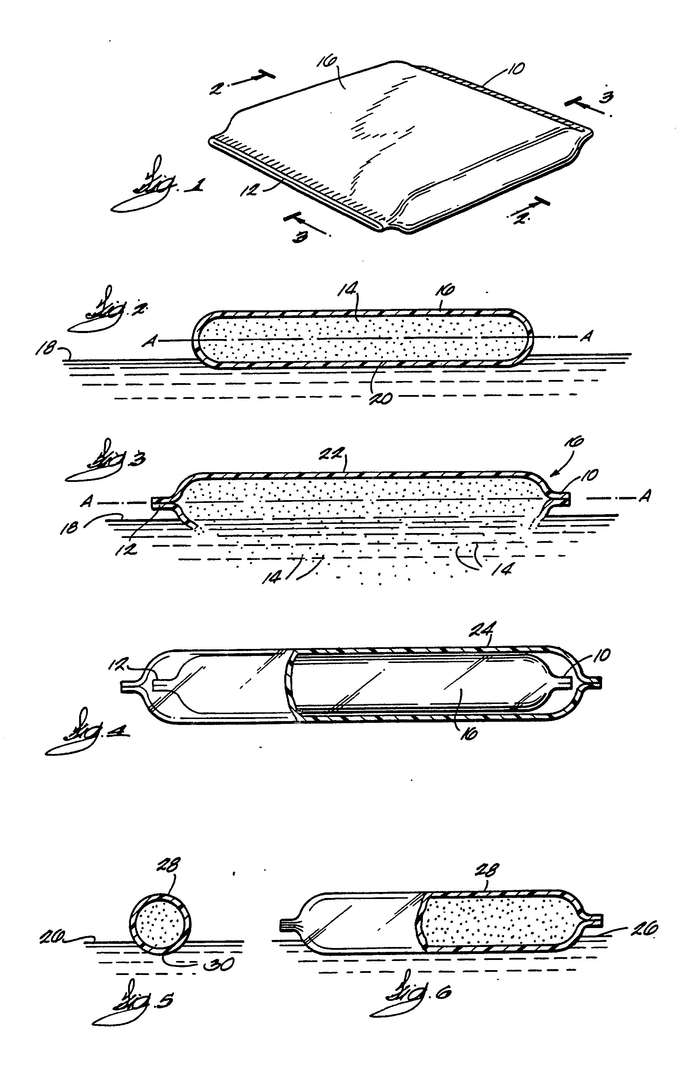

With particular reference to Figure 1 of the drawings, a package is illustrated which contains powdered activated carbon. More particularly, a portion of tubular plastics roll stock is sealed at one end 10 of the tubular section. A desired amount of powdered activated carbon, preferably 11.36-27.27 Kg (25-60 pounds), is added to the bag. Using conventional techniques, the majority of the air is expelled from the bag and its open end is sealed to form a second closed end 12. The predetermined quantity of powdered activated carbon 14 is thus completely contained in a package 16.

This particular configuration for the package, together with the low bulk density, which is characteristic of powdered activated carbon, causes the package to float when placed on a liquid body as illustrated in Figures 2 and 3.

Preferably the tubular stock is selected so that the final package will take on a pillow-like shape. More specifically, the package has a length viewed in Figure 3, and a width, viewed in Figure 2, and a thickness, both Figures 2 and 3. With one of its dimensions, length, width or thickness but in this case length, being greater than the other two, the pillow-like package will have a planar extent in at least one of those directions. The plane AA in the preferred embodiment is indicated in Figures 2 and 3 by a chain line. With that configuration, the package will assume an orientation on the surface 18 of the liquid medium with the plane AA generally parallel to the surface 18. The underside 20 of the package 16 is the only part of the bag which is directly exposed to the liquid medium (primarily water) in the waste water treatment process.

The material of the package 16 is water soluble. Therefore, the underside 20 of the package will gradually dissolve and, as it dissolves, particles of the activated carbon 14 are dispersed into and under the surface of the liquid medium as can be seen in Figure 3.

A water soluble package in accordance with this invention may be made of any material which meets the criteria of water solubility and has sufficient strength to contain the powdered activated carbon. Such materials include carboxymethyl dextran, polyvinylpyrrolidone and polyvinyl alcohol (PVA). PVA is used in the preferred embodiment. PVA is commercially available in the form of tubular roll stock for production of packages of the type contemplated by this invention from Mono-sol division, Crist Craft Industrial Products, Inc., Gary, Indiana, U.S.A.

As can be seen in Figure 3, as the powdered activated carbon is being dispersed into the liquid medium, the upper portion 22 of the package remains relatively in tact. Top Portion 22 isolates the powdered activated carbon from the environment above the surface of the liquid medium so that the activated carbon will not be released into that environment. As the dispersion of the activated carbon into the liquid medium proceeds, the quantity under the package 16 is reduced and the top portion 22 gradually collapses. Eventually, the entire package will dissolve into the liquid medium.

An additional advantage of the use of PVA is that PVA is a suitable wetting agent. Powdered activated carbon itself is not readily wetted but the use of the PVA for the package material increases the wetability of the activated carbon as it is dispersed into the liquid medium. A sample of PVA dissolved in water to produce a 112 mg/l solution will reduce the surface tension of the solution to 38.5 dynes/cm compared to 58.6 dynes/cm for pure water alone. This results in a 34.3% decrease in surface tension through the use of PVA in solution.

For shipment and storage, the powdered activated carbon package 16 is placed within an outer, water resistant package 24.

To summarize, an open ended empty bag made of PVA material is filled with powdered activated carbon preferably in an amount of between 11.36-27.27Kg (25 and 60 pounds). That amount is easily handled by one individual. The bulk of the air is expelled from the package and the open end is sealed. The bag is made from tubular PVA stock such that when both ends (or opposed edges) are sealed, the package will assume a pillow-like configuration. This basic package is placed in an outer over-package which may be made of multi-ply paper or plastics material 24 which is suitably water resistant.

The sealed container with over-package may be shipped to the point of use and stored until needed. When needed, the user opens the over-package 24 and places the sealed, carbon containing water soluble package 16 onto the surface of the waste water. In the powdered activated carbon waste water treatment system described in US-A 3 094 518 and US-A 4 069 148, this may be in the aeration basin. The configuration of the package and the bulk density of the powdered activated carbon contribute to the sealed container floating on the surface of the waste water. As the underside of the container contacting the waste water dissolves, powdered activated carbon is wetted and is dispersed within the waste water. The PVA, a wetting agent, assists in wetting the powdered carbon as the PVA dissolves in water.

An additional advantage of the use of PVA is that it is a biodegradable material and as such places only a small loading on the waste water treatment system.

The water soluble packaging for the powdered activated carbon may take other forms than that illustrated in Figures 1-4. Figures 5 and 6 illustrate an elongated, circular in cross-section package. Although this form of the package is not as desirable as the pillow shape, it will give satisfactory results. When this package is placed on the surface of the water as shown in Figure 5, it will eventually assume a position as shown in Figure 5 on the surface 26 of the liquid medium. The underside 30 will dissolve and disperse the powdered activated carbon into the liquid medium as described previously. One of the disadvantages with this arrangement is that this package may not immediately assume a relatively stationary position and other parts of the bag may become wetted and dissolved resulting in some environmental exposure of the powdered activated carbon.

This invention provides a number of advantages over other methods of adding powdered substances to waste water. The invention is particularly suited to smaller waste water treatment systems where only 50 to 100 pounds of powdered activated carbon are needed in a single day. It does not require expensive hardware to introduce the powdered carbon into the waste water. Further, only the protective over-package 24 remains after use and this is free of powdered carbon. Usually encountered dust problems are eliminated and user exposure to the powdered carbon is virtually eliminated.

## Claims

1. A process for addition of a powdered substance to waste water in a waste water treatment process characterised by the steps of providing a sealed package (16 or 28) of water-soluble material containing said powdered substance (14) and floating said sealed package (16 or 28) on the surface of said waste water, the portion (20) of said package in contact with said waste water dissolving and allowing said powdered substance (14) to disperse into and below the surface of said waste water and the remainder of said package remaining in tact above said powdered substance (14) thus preventing escape of said powdered substance above the surface of said waste water.

2. A process according to claim 1 characterised in that the powdered substance is powdered activated carbon.

3. A process according to claim 1 or claim 2 characterised in that the package has a pillow-like shape one dimension thereof being greater as compared to the other dimensions thereof, said package having a generally planar shape in said one dimension which causes said package to float on said waste water with said one planar dimension generally parallel to the surface of said waste water.

4. A process according to any one of claims 1 to 3 characterised in that said package is made of polyvinyl alcohol.

5. A process according to any one of claims 2 to 4 characterised in that said sealed package is placed in an outer, sealed container (24) made of water-resistant material so that said package is protected for storage, shipment and prior to use in the waste water treatment process.

6. A process according to claim 2,3,4 or 5 characterised in that the sealed package is made of tubular stock.

7. A process according to any one of claims 1 to 6 characterised in that said package (16 or 28) is filled with powdered activated carbon in the range of 11.38 -27.27Kg (25 to 60 pounds).

8. A sealed package for powdered substances useable in a waste water treatment process characterised in that the package (16 or 28) is made of water soluble material, and a predetermined amount of said powdered substance (14) is contained within said package, said package being capable of floating on a body of waste water.

9. A package according to claim 8 characterised in that said sealed package (16 or 28) has at least one dimension which is greater as compared to its other dimension attributing a generally planar extent to said package which is generally parallel to the surface of said waste water when said sealed package is floating thereon.

10. A package according to claim 9 characterised in that said powdered substance is activated carbon.

11. A package according to claim 9 or claim 10 characterised in that said sealed package is made of polyvinyl alcohol.

12. A package according to any one of claims 9 to 11 characterised by an outer package (24) surrounding said sealed package (16 or 28) and being made of water-resistant material.

13. A package according to any one of claims 9 to 12 characterised in that the amount of powdered activated carbon in said sealed package is in the range of 11.36 to 27.27Kg (25 to 60 pounds).

Fig. 1

Fig. 2

Fig. 3

Fig. 4

Fig. 5

Fig. 6

European Patent
Office

**EUROPEAN SEARCH REPORT**

Application Number

EP 89 30 8058

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | US-A-2 750 027 (S.N. CUMMINGS) <br> * Column 2, lines 55-64; column 3, lines 14-15,39-41; column 4, lines 69-75; column 5, lines 29-38 * <br> --- | 1,3,4,6 ,8,9,11 ,12 | C 02 F 1/00 <br> C 02 F 1/28 <br> C 02 F 1/68 |
| Y | PATENT ABSTRACTS OF JAPAN, vol. 11, no. 69 (C-407), 3rd March 1987; & JP-A-61 227 885 (NIPPON NOHYAKU CO., LTD) 09-10-1986 <br> --- | 1,3,4,6 ,8,9,11 ,12 | |
| A,D | US-A-3 186 869 (J. FRIEDMAN) <br> * Column 1, line 65 - column 2, line 19 * <br> --- | 3,4,11 | |
| A,D | US-A-4 119 604 (R.D. WYSONG) <br> * Column 1, lines 46-56; column 9, lines 9-34,45-61 * <br> ----- | 1-3,10 | |

|  |  |
|---|---|
|  | TECHNICAL FIELDS SEARCHED (Int. Cl.5) <br><br> C 02 F |

The present search report has been drawn up for all claims

| Place of search | Date of completion of the search | Examiner |
|---|---|---|
| THE HAGUE | 24-01-1990 | GONZALEZ Y ARIAS M.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)